# EUROPEAN PATENT SPECIFICATION

(11) **EP 0 952 012 B1**
(45) Date of publication and mention of the grant of the patent: **25.06.2003**
(21) Application number: 99107176.2
(22) Date of filing: 13.04.1999
(51) Int. Cl.: B60D 1/02

(54) **Coupling assembly for towing motor vehicles**
Kupplungseinheit für Schleppkraftfahrzeuge
Ensemble d'accouplement pour véhicules automobiles tracteurs

(30) Priority: 24.04.1998 IT TO980353
(43) Date of publication of application: 27.10.1999
(73) Proprietor: IVECO FIAT S.p.A., 10156 Torino (IT)
(72) Inventor: Riva, Vittorio, 10100 Torino (IT)
(74) Representative: Franzolin, Luigi

(56) References cited:
- DE-A- 2 047 978
- DE-C- 921 287
- US-A- 4 711 461
- US-A- 5 351 982
- PATENT ABSTRACTS OF JAPAN vol. 10, no. 105 (M-471) [2162], 19 April 1986 (1986-04-19) & JP 60 236811 A (NISSAN JIDOSHA KK), 25 November 1985 (1985-11-25)

## Description

The present invention relates to a coupling assembly for towing motor vehicles, in particular to a coupling assembly for the emergency towing of commercial vehicles.

Coupling assemblies of the above type are known, which substantially comprise an anchor plate secured to a front portion of the chassis of the motor vehicle to be towed, a coupling member for connection via a cable to a towing vehicle, and a securing device for releasably securing the coupling member to the anchor plate.

In particular, the coupling member comprises a forked element which has a base part adapted to be secured to the anchor plate by means of the securing device and two arms extending parallel to one another from the base part itself, and a pin carried transversely by said arms and forming a coupling for the connection via a cable or bar to the towing vehicle.

The securing device is generally of the bayonet-type and comprises a tooth carried by the base part of the forked element and adapted to engage with a groove of decreasing section provided in the anchor plate.

Although said securing means enables the coupling member to be dismounted as a unit from the anchor plate when not in use, in operation it can give rise to the danger of accidental disengagement from the coupling member itself. In fact, in certain relative positions between the towing vehicle and the towed vehicle, the towing force could introduce components which are transverse to the cable coupling the vehicles themselves, which components could in turn induce rotation of the coupling member with respect to the anchor plate in the disengagement direction of the latter.

DE-C-921 287 discloses a coupling assembly for a trailer, wherein the part destined to be connected to the towing vehicle cannot be removed as a unit from the part attached to the trailer.

The object of the present invention is to devise a coupling assembly for towing motor vehicles, which makes it possible to obviate simply and economically the disadvantage associated with the above-mentioned known coupling assemblies.

This object is achieved by a coupling assembly for emergency towing motor vehicles as claimed in claim 1.

With a view to a better understanding of the present invention a preferred embodiment will be described non-restrictively by way of example below and with reference to the accompanying drawings, in which:

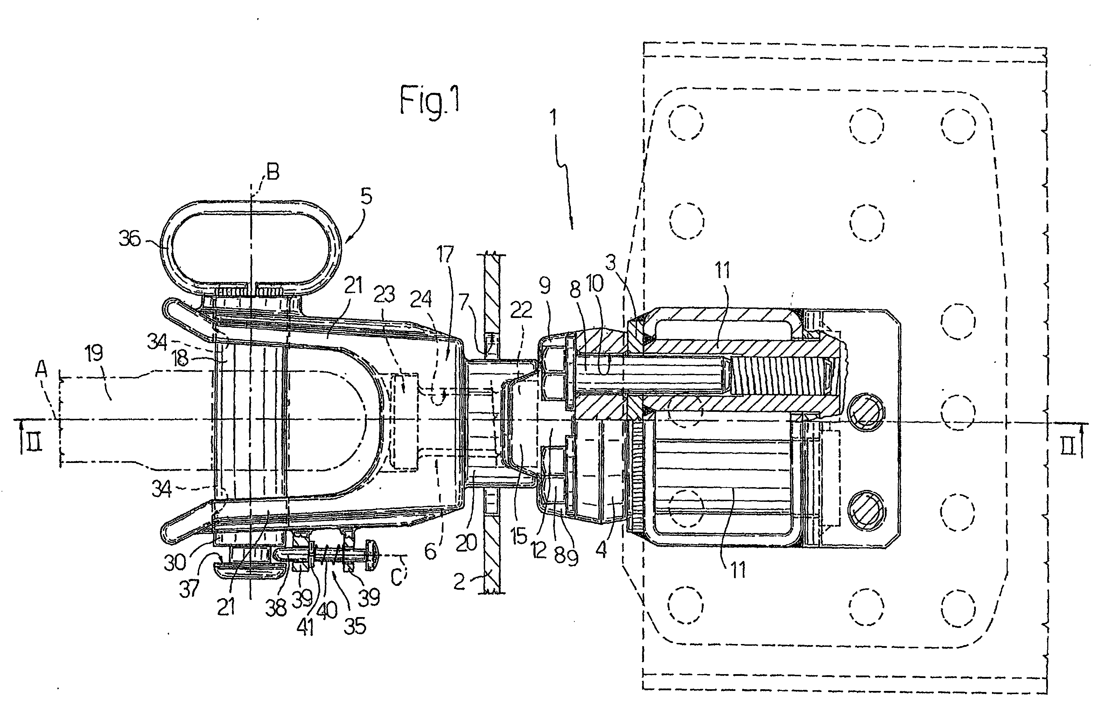

Figure 1 is a view in elevation, partly in section, of a coupling assembly according to the invention for towing motor vehicles, and

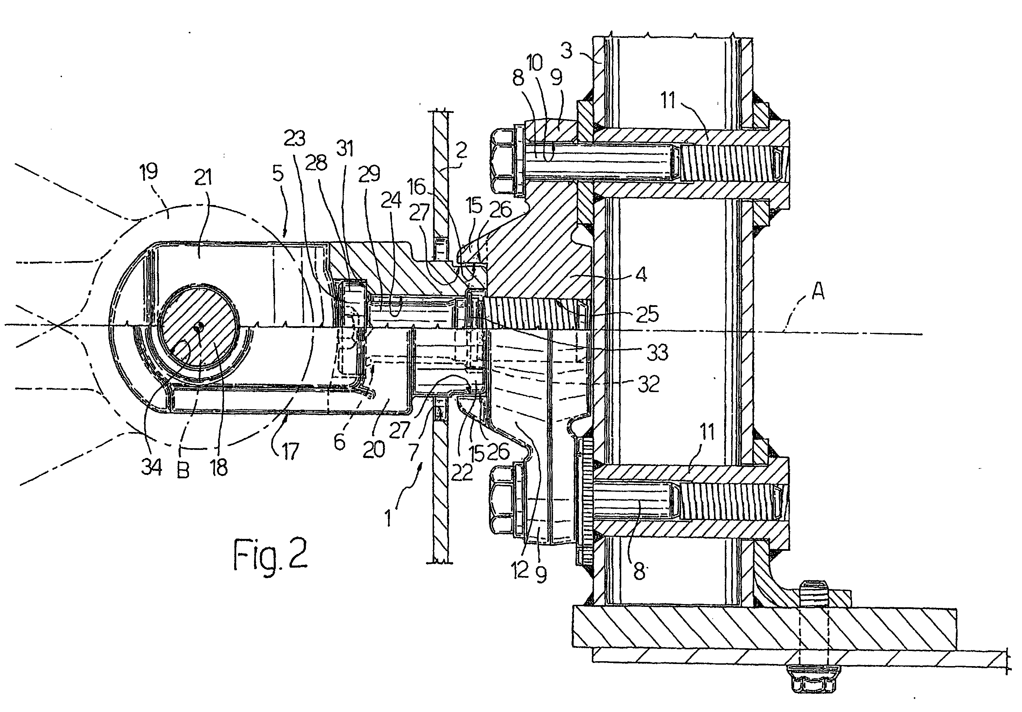

Figure 2 is a section along the lire II-II in Figure 1.

Referring now to the accompanying drawings, the reference numeral 1 denotes a coupling assembly for towing a commercial vehicle, of which there are only partly shown a front bumper 2 and a front cross member 3 of the chassis disposed set back towards the interior of the vehicle with respect to the bumper 2 itself.

The assembly 1 comprises an anchor plate 4 securely attached to the cross member 3 of the vehicle, and a coupling member 5 adapted to be connected to the plate 4 by means of releasable securing means 6 and to protrude forwards from the vehicle through a through-hole 7 provided in the bumper 2; the coupling member 5 is adapted to be mounted and dismounted as a unit from the plate 4 so that it can be stored away when not in use.

In particular, the plate 4 is of substantially rectangular outer shape and is attached to the cross member 3 by four screws 8 disposed in registration with apex portions 9 thereof. More precisely, each screw 8 engages in a through-hole 10 provided in the respective apex portion 9 of the plate 4 and a respective threaded sleeve 11 mounted to pass through the cross member 3 and welded externally thereto.

Additionally, the plate 4 has on a surface opposite the cross member 3 a raised intermediate portion 12 and a pair of tongues 15 projecting towards the bumper 2 from the intermediate portion 12 itself, which are situated facing one another so as to form a seat 16 for receiving one end of the coupling member 5.

The coupling member 5 essentially comprises a forked element 17 having a longitudinal axis A at right angles to the plate 4, and a pin 18 carried by the forked element 17, having an axis B at right angles to the axis A and forming an attachment for a cable 19 (illustrated in dashed lined in the drawings) for connection to a towing vehicle (not shown).

In particular, the forked element 17 has a base part 20 adapted to be mounted so as to pass with play through the hole 7 of the bumper 2 and to be secured to the plate 4 by means of the releasable securing means 6, and a pair of arms 21 extending parallel to one another and to the axis A of the part 20 itself. More particularly, the part 20 has an end portion 22 opposite the arms 21 designed to be secured by means of the releasable securing means 6 in the seating 16 between the tongues 15.

According to the present invention the releasable securing means 6 comprise a screw 23 fitted through a through-hole 24, with an axis A, in the part 20 of the coupling member 5 and adapted to engage in a threaded through-hole 25 provided in the intermediate portion 12 of the plate 4; furthermore, the tongues 15 are bounded, with respect to one another, by respective flat surfaces 26 adapted to co-operate in contact with respective flat surfaces 27 of the end portion 22 of the part 20 of the forked element 17 so as to form a prismatic connection between the coupling member 5 and the plate 4, for the purpose of preventing rotation of the coupling member 5 itself and, therefore, of the screw 23 about the axis A.

In particular, the screw 23 is of socket head type and comprises a head 28 disposed outside the hole 24 and a shank 29 of smaller outer diameter than the diameter of the head 28 and having a threaded end portion engaging in the hole 25 of the plate 4. The hole 24 has two axial shoulders 31,32 which are turned respectively towards the pin 18 and towards the plate 4 and forming respective axial stop members for the head 28 of the screw 23 and for a resilient ring 33 mounted coaxially on the shank 29 of the screw 23 itself; this prevents axial unscrewing of the screw 23 from the forked element 17 when the coupling member 5 is disconnected from the vehicle.

The pin 18 is mounted axially freely in respective transverse through-holes 34 of the arms 21 and is retained in a predetermined axial position with respect to the arms 21 themselves, hereinafter designated the operative position (accompanying drawings), by a releasable securing device 35 carried by the forked element 17.

In particular, in the operative position, the pin 18 protrudes outwards on opposite sides with respect to the arms 21 respectively with an elongated annular grip portion 36 thereof and with an end portion 30.

The releasable securing device 35 comprises a stop pin 38 whose axis C is parallel to the axis A and which is supported by a pair of extensions 39 fully extending so as to project from one of the arms 21 and able to move axially between a position in engagement with an annular groove 37 provided externally on the end portion 30 of the pin 18, in which it maintains the pin 18 itself in the operative position, and a position disengaged from the groove 37 itself, in which, therefore, the pin 18 can be unscrewed axially from the forked element 17.

Furthermore, the securing device 35 comprises a helical spring 40 mounted coaxially on the stop pin 38 in a position interposed between the extensions 39, and which has a resilient ring 41 attached to the stop pin 38 and which is adapted to exert on the resilient ring 41 itself an axial force tending to urge the stop pin 38 into the engagement position.

The advantages which can be achieved with the present invention are evident from a study of the features of the coupling assembly 1.

In particular, the fact that the coupling member 5 is locked by means of the screw 23 on the anchor plate 4 and that respective prismatic connecting surfaces 26,27 are provided between the anchor plate 4 itself and the coupling member 5 obviates any danger of accidental disengagement of the latter under the towing force.

Furthermore, the coupling member 5 retains the property of being able to be released as a unit from the vehicle when not in use, since the screw 23 is maintained engaged in the hole 24 of the forked element 17 without possibility of removal as a result of the interaction between the resilient ring 33 and the shoulder 32 and between its own head 28 and the shoulder 31.

It is evident that the coupling assembly 1 can be subject to modifications and variations without departing from the scope of protection defined by the claims.

## Claims

1. A coupling assembly (1) for emergency towing motor vehicles, comprising:
- an anchoring element (4) securely attached to a front part (3) of the motor vehicle to be towed;
- a coupling member (5) having a fastening part (20) which can be secured to said anchoring element (4) and coupling means (18) for connection to a towing vehicle;
- releasable securing means (6) for securing said fastening part (20) of said coupling member (5) to said anchoring element (4); and
- prismatic connection means (26,27) between said anchoring element (4) and said fastening part (20);
**characterised in that** said releasable securing means (6) comprise at least one screw (23) carried by said fastening part (20) of said coupling member (5) and adapted to engage in an associated threaded hole (25) provided in said anchoring element (4), and **in that** said prismatic connection means (26,27) are carried by an end portion (15) of said anchoring element (4) and by an end portion (22) of said fastening part (20) opposite to said coupling means (18).

2. A coupling assembly according to claim 1, **characterised in that** said screw (23) is fitted in a through-hole (24) provided in said fastening part (20), said coupling assembly (1) comprising stop means (28,33,31,32) between said screw (23) and said hole (24) in said fastening part (20) for preventing the unscrewing of said screw (23) of the fastening part (20).

3. A coupling assembly according to claim 2, **characterised in that** said stop means comprise a pair of shoulders (31,32) provided in said hole (24) in said fastening part (20) and forming respective abutments for a head (28) of said screw (23) and for a resilient ring (33) mounted coaxially on a shank (29) of the screw (23) itself.

4. A coupling assembly according to any one of the preceding claims, **characterised in that** said end portion of said anchoring element (4) comprise at least one pair of tongues (15) projecting from the anchoring element (4) itself and forming between them a seat (16) for receiving the end portion (22) of said fastening part (20) of said coupling member (5), said prismatic connecting means comprising respective flat surfaces (26) of said tongues (15) which, in operation, co-operate in contact with respective flat surfaces (27) of said end portion (22) of the fastening part (20).

## Patentansprüche

1. Kupplungsanordnung (1) für Motornotschleppfahrzeuge, umfassend:
- ein Verankerungselement (4), das sicher an einem vorderen Teil (3) des zu schleppenden Motorfahrzeugs angebracht ist;
- ein Kupplungselement (5), das einen Befestigungsteil (20), der an dem Verankerungselement (4) befestigt werden kann, und eine Kupplungseinrichtung (18) zur Verbindung mit einem Schleppfahrzeug besitzt;
- eine lösbare Befestigungseinrichtung (6) zum Befestigen des Befestigungsteils (20) des Kupplungselements (5) an dem Verankerungselement (4); und
- eine prismatische Verbindungseinrichtung (26, 27) zwischen dem Verankerungselement (4) und dem Befestigungsteil (20);
**dadurch gekennzeichnet, dass** die lösbare Befestigungseinrichtung (6) mindestens eine Schraube (23), die durch den Befestigungsteil (20) des Kupplungselements (5) getragen ist und dazu ausgelegt ist, in ein zugeordnetes Gewindeloch (25) einzugreifen, das in dem Verankerungselement (4) vorgesehen ist, aufweist, und dass die prismatische Verbindungseinrichtung (26, 27) durch einen Endabschnitt (15) des Verankerungselements (4) und durch einen Endabschnitt (22) des Befestigungsteils (20) gegenüberliegend zu der Kupplungseinrichtung (18) getragen ist.

2. Kupplungsanordnung nach Anspruch 1, **dadurch gekennzeichnet, dass** die Schraube (23) in ein Durchgangsloch (24) eingesetzt ist, das in dem Befestigungsteil (20) vorgesehen ist, wobei die Kupplungsanordnung (1) eine Stoppeinrichtung (28, 33, 31, 32) zwischen der Schraube (23) und dem Loch (24) in dem Befestigungsteil (20) zum Verhindern eines Herausdrehens der Schraube (23) aus dem Befestigungsteil (20) aufweist.

3. Kupplungsanordnung nach Anspruch 2, **dadurch gekennzeichnet, dass** die Stoppeinrichtung ein Paar von Schultern (31, 32) aufweist, die in dem Loch (24) in dem Befestigungsteil (20) vorgesehen sind und jeweilige Anlagen für einen Kopf (28) der Schraube (23) und für einen elastischen Ring (33), der koaxial an einem Schaft (29) der Schraube (23) fest montiert ist, bilden.

4. Kupplungsanordnung nach einem der vorhergehenden Ansprüche, **dadurch gekennzeichnet, dass** der Endabschnitt des Verankerungselements (4) mindestens ein Paar von Zungen (15) aufweist, die von dem Verankerungselement (4) selbst hervorstehen und zwischen ihnen einen Sitz (16) zum Aufnehmen des Endabschnitts (22) des Befestigungsteils (20) des Kupplungselements (5) bilden, wobei die prismatische Verbindungseinrichtung jeweilige ebene Flächen (26) der Zungen (15) aufweist, die im Betrieb in Kontakt mit jeweiligen ebenen Flächen (27) des Endabschnitts (22) des Befestigungsteils (20) zusammenwirken.

## Revendications

1. Ensemble d'attelage (1) pour véhicules automobiles de remorquage de secours, comprenant:
- un élément d'ancrage (4) fixé fermement à une partie avant (3) du véhicule automobile devant être remorqué;
- un élément d'accouplement (5) comportant une partie de fixation (20) qui peut être fixée audit élément d'ancrage (4) et des moyens d'accouplement (18) pour le raccordement à un véhicule de remorquage;
- des moyens de fixation amovibles (6) pour fixer ladite partie de fixation (20) dudit élément d'accouplement (5) audit élément d'ancrage (4); et
- des moyens de raccordement prismatiques (26, 27) entre ledit élément d'ancrage (4) et ladite partie de fixation (20);
**caractérisé en ce que** lesdits moyens de fixation amovibles (6) comprennent au moins une vis (23) portée par ladite partie de fixation (20) dudit élément d'accouplement (5) et adaptés pour s'engager dans un trou taraudé associé (25) prévu dans ledit élément d'ancrage (4), et **en ce que** lesdits moyens de connexion prismatiques (26, 27) sont portés par une partie d'extrémité (15) dudit élément d'ancrage (4) et par une partie extrémité (22) de ladite partie de fixation (20) à l'opposé desdits moyens d'accouplement (18).

2. Ensemble d'attelage selon la revendication 1, **caractérisé en ce que** ladite vis (23) est montée dans un trou traversant (24) prévu dans ladite partie de fixation (20), ledit ensemble d'accouplement (1) comprenant des moyens d'arrêt (28, 33, 31, 32) entre ladite vis (23) et ledit trou (24) dans ladite partie de fixation (20) pour empêcher le dévissage de ladite vis (23) de la partie de fixation (20).

3. Ensemble d'attelage selon la revendication 2, **caractérisé en ce que** lesdits moyens d'arrêt comprennent une paire d'épaulements (31, 32) prévus dans ledit trou (24) dans ladite partie de fixation (20) et formant des aboutements respectifs pour une tête (28) de ladite vis (23) et pour une bague élastique (33) montée coaxialement sur une tige (29) de la vis (23) elle-même.

4. Ensemble d'attelage selon l'une quelconque des revendications précédentes, **caractérisé en ce que** ladite partie d'extrémité dudit élément d'ancrage (4) comprend au moins une paire de languettes (15), qui font saillie à partir de l'élément d'ancrage (4) lui-même et forment entre elles un siège (16) destiné à recevoir la partie d'extrémité (22) de ladite partie de fixation (20) dudit élément d'attelage (5), lesdits moyens de connexion prismatiques comprenant des surfaces planes respectives (26) desdites languettes (15) qui, en fonctionnement, coopèrent en contact avec des surfaces planes respectives (27) de ladite partie d'extrémité (22) de la partie de fixation (20).
